# EUROPEAN PATENT APPLICATION

(11) **EP 4 730 105 A1**
(43) Date of publication of application: **22.04.2026**
(21) Application number: 25204391.4
(22) Date of filing: 24.09.2025
(51) Int. Cl.: G06F 8/30, G06F 8/73

(54) **COMPUTER-IMPLEMENTED CONFIGURATION METHOD, CORRESPONDING PROCESSING DEVICE AND COMPUTER PROGRAM PRODUCT**

(30) Priority: 21.10.2024 IT 202400023397
(71) Applicant: STMicroelectronics International N.V., 1228 Plan-les-Ouates, Geneva (CH)
(72) Inventor: SCIBETTA, Roberto, I-20862 Arcore (Monza Brianza) (IT); UKMAR, Riccardo, I-10010 Albiano d'Ivrea (Torino) (IT)
(74) Representative: Buzzi, Notaro & Antonielli d'Oulx S.p.A.

(57) **Abstract**

A method, comprising: providing at least one executable software code portion (11) of a software component, SWC comprising instructions which, when the program is executed by an electronic control unit, ECU of a vehicle, cause the ECU to perform signal processing operations; providing at least one non-executable tagged software code portion (13) associated with the at least one executable software code portion (11) of the SWC, the non-executable tagged software code portions (13) comprising code comment tags of a set of code comment tags (12); providing a set of configuration values (15) of the at least one executable software code portion (11, 13) of the SWC; parsing (16) the at least one non-executable tagged software code portion (13) associated to the at least one executable software code portion (11) of the SWC, detecting the code comment tags in the at least one non-executable tagged software code portions (13); based on the detected code comment tags and on the set of configuration values (15), modifying the at least one executable software code portion (11) associated to detected code comment tags in the at least one executable software code portion (11), providing a configured SWC (17) as a result.

## Description

### Technical field

The description relates to embedded configurator for electronic control units (ECUs), such as micro-processing units (MPUs) and microcontroller units (MCUs).

One or more embodiments may be applied to the automotive field, for instance facilitating safety library configuration.

### Background

Modern automobiles are now capable of supporting many complex functions, such as self-driving, engine emissions control, image detection-based services and so on. In order to do so, the number of Electronic Control Units (ECUs) embedded in vehicles is steadily increasing.

An electronic control unit (ECU), also known as an electronic control module (ECM), is an embedded system comprising one or more processing cores (e.g., microcontrollers) as well as memory circuits (e.g., RAM) and is provided to control (via software instructions stored in the memory, often denoted as firmware) one or more of the electrical systems or subsystems in a vehicle.

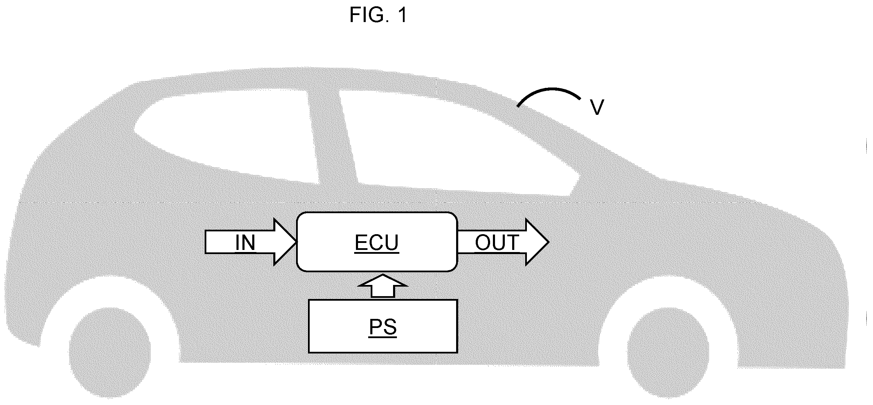

As exemplified in Figure 1, a ECU is coupled to a power supply PS (e.g., the battery of the vehicle) that provides electric power thereto in order to power processing circuitry to process input signals INPUT (e.g., from sensors on-board the vehicle V) and provide output signals OUTPUT (e.g. for driving sub-systems of the vehicle V, such as air conditioning).

Electronic Control Units (ECUs) can be equipped with multiple cores to enhance computing power and provide software functional capabilities.

A software component (SWC) is a modular computer program product that builds up an application.

Document US 2013/0080997 A1 discusses a system and method for tracking and notifying related software, modules, and configuration files during software development and maintenance. A database, software build programming, a software module tracker, requirements management tools, and software source code that includes a comments area are implemented in connection with user interfacing to provide the method.

Document US 2008/0228762 A1 discusses methods and arrangements, to manage comment data that is associated with computer executable code. Comment data associated with a line or lines of executable code can be stored, and a tag can be assigned to the comment, data or the line(s) of code. When it is desired to locate, information about lines of code, tags allow for an improved way to search for the desired lines of code. Thus, in response to a user query for information, a search engine can locate a specific tag or groups of tags and display code and comments associated with the located tag(s).

Some configuration tools exploit a platform architecture currently known as automotive open software architecture (AUTOSAR) in which three software layers running on a microcontroller are identified: application, runtime environment (RTE) and basic software (BSW).

The main limitation of such configuration tools is that the development environment is closed and limits their interoperability.

### Object and summary

An object of one or more embodiments is to contribute in advancing one or more aspects.

According to one or more embodiments, that object can be achieved via a method having the features set forth in the claims that follow.

One or more embodiments may relate to a corresponding ECU device.

One or more embodiments may include a computer program product loadable in the memory of at least one processing circuit (e.g., a computer) and including software code portions for executing the steps of the method when the product is run on at least one processing circuit. As used herein, reference to such a computer program product is understood as being equivalent to reference to a computer-readable medium containing instructions for controlling the processing system in order to co-ordinate implementation of the method according to one or more embodiments. Reference to "at least one computer" is intended to highlight the possibility for one or more embodiments to be implemented in modular and/or distributed form.

The claims are an integral part of the technical teaching provided herein with reference to the embodiments.

One or more embodiments facilitate providing a general purpose solution.

One or more embodiments mainly deals with C code comments which can be tailored for customers.

One or more embodiments facilitate providing a relatively simple and user-friendly method for configuring a Safety library of an electronic control unit, ECU on board a vehicle.

One or more embodiments exploit "keys" within the comment in a data structure. For instance, the tool is able to generate a kio file (XML-like) where it stores all the data of the structure.

In one or more embodiments, a further tool is able to manipulate the kio file in a graphical way.

In one or more embodiments, a configurator circuit creates a set of "source" configuration files to be built together the other files of the module and application source.

One or more embodiments facilitate the generation, maintenance and modification of "source" files by populating some pre-defined parameters tables, for all the configurable software components, SWCs.

### Brief description of the several views of the drawings

One or more embodiments will now be described, by way of nonlimiting example only, with reference to the annexed Figures, wherein:
Figure 1 has been discussed in the foregoing;
Figure 2 is a diagram exemplary of a configuration method as per the present disclosure; and
Figure 3 is a diagram of operations of the configuration method as per the present disclosure.

Corresponding numerals and symbols in the different figures generally refer to corresponding parts unless otherwise indicated.

The figures are drawn to clearly illustrate the relevant aspects of the embodiments and are not necessarily drawn to scale.

The edges of features drawn in the figures do not necessarily indicate the termination of the extent of the feature.

### Detailed description

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular conformations, structures, or characteristics may be combined in any adequate way in one or more embodiments.

The references used herein are provided merely for convenience and hence do not define the extent of protection or the scope of the embodiments.

For the sake of simplicity, in the following detailed description a same reference symbol may be used to designate both a node/line in a circuit and a signal which may occur at that node or line.

Computer programming tools, currently referred to as integrated development environments, IDEs, comprise the possibility for programmers to introduce so-called "comments", that is non-executable text, along the executable software code portions. Such comments facilitate providing "documentation" the design flow of the code and log important details. Such a documentation can make it easier for subsequent programmers to locate and understand features within the code.

Generally, a programmer can add comments at a "executable source code" level, or integrate comments into the executable source code. "Executable source code" is a machine readable language level that can instruct a processor of a computer to execute specific functions. Comments are intended to assist programmers in understanding something about the code and when a computer executes the code, the computer will ignore the comments that are integrated with the code. For example, a comment can locate a start of a functional feature in the program and why the feature is there, as well as it can locate an end to a section of code that provides the feature. When a programmer fixes a problem he or she may add additional comments regarding what was learned, how an improvement was made, why a line of code was added or modified and what problems were fixed by the added line(s) of code.

During the programming procedure, source code can be displayed to a user via the IDE graphical interface and comments can be added adjacent to lines of code. Specific syntax in the displayed program can separate or delineate the comments from executable code. Some existing IDE's include Visual J++, VisualAge for C++ or Java, Java WorkShop, Visual Café, Elipse and IBM Websphere Studio Application Developer.

In the following, a method of managing and parsing comment data associated with lines of computer executable code is discussed. Comment data can be linked to the executable code. The comment data can be stored, and a tag can be assigned to the comment data to further classify, describe or provide information about the comment data.

Program languages such as C, C++ and Java, to name a few, each have their own syntax which is analogous to the precision grammar requirements present in different languages.

For instance, in a Java IDE the presence of two back slashes entered as the first characters on a line in the code section are used to indicate or delineate a comment. Therefore, the computer compiling the source code will ignore the characters that follow the two back slashes.

Tags can be placed in areas of the IDE that are marked for comments. However, different ways to place or incorporate tags into the code would not part from the scope of the present disclosure. For example, different programming tools can abbreviate, locate and identify comments differently, possibly outside of the comments section without parting from the teachings of the present disclosure.

Software components (SWCs), such as a "C" driver, are part of complex systems, with different requirements. For this reason, each SWC can be configurable to have a specific configuration. A configuration can be obtained and validated through the usage of an ad-hoc configurator.

Configuration values for software components, SWCs for ECUs are stored in digitals object currently referred to as "kio file" can be used to store the current data of a given data structure. Files with extension kio (Konfigure Input Output) comprise extended markup language (XML) data and are editable through a text/XML editor or graphical user interface (GUI). A kio file is associated to each configuration of each SWC.

When it is desired to configure the software code component, the method comprises locating a tag in the code and/or in the comments (e.g., via a search engine) to insert specific initialization values in the executable software code portions associated with the located tag(s).

In an exemplary scenario in which tags are in the comments, in order to configure the component, the data structures in the code can be rewritten with configuration parameters taken from the kio file.

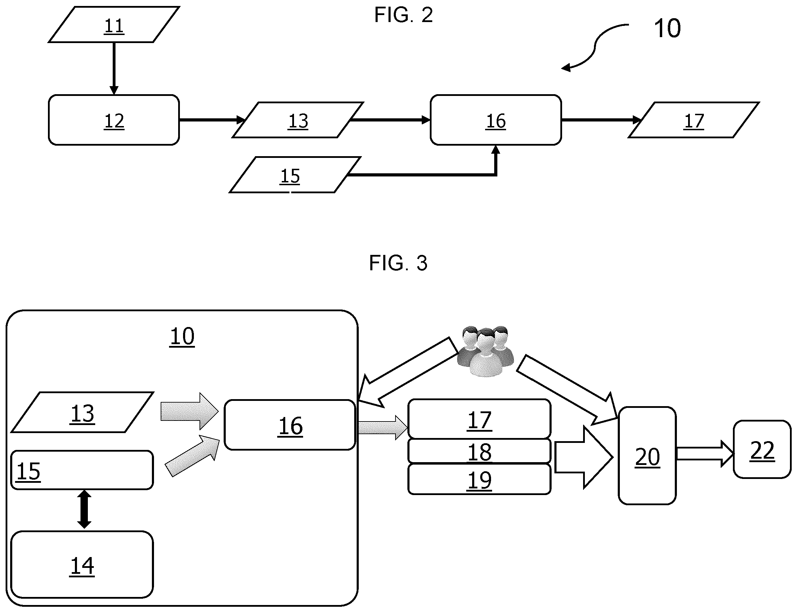

As exemplified in Figure 2, a method 10 to configure a software component, SWC comprises:
block 11: providing at least one initial software code portion to be initialized, the initial software code portion comprising a set of comments which are non-executable parts of the software;
block 12: tagging the comments in the set of comments of the at least one initial software code provided 11,
block 13: as a result of tagging in block 12, obtaining at least one tagged software code portion;
block 15: providing an (e.g., user) interface for entering (e.g., by a user) a set of configuration values (e.g., stored in a file with file extension KIO and comprising the configuration values in XML format);
block 16: parsing the at least one tagged software code portion obtained in block 13 to detect the tags therein and modifying the tagged software code portion by inserting therein the configuration values corresponding to the parsed tags;
block 17: as a result of the operations in block 16, obtaining an output code produced from the source code and modified by adding the configuration values in the source code according to the tags inserted in block 13.

As exemplified in Figure 2, the configurator 16 is configured to:
- receive, via an (user) interface, a set of configuration values for the software component, SWC;
- receive a tagged software code portion comprising tags in comment sections of the code and parsing the tagged software code portion in order to detect the tags, and
- provide an output code comprising a tagged configuration structure comprising the contents of the value tags.

As exemplified in Figure 2, the operation of tagging the code in block 12 comprises providing descriptive attributes for lines of code and for the comments. For example, tags can indicate a timestamp, a revision number, a release number, programmer contact information, a feature, a function and so on.

The tags can be user defined and can be abbreviated such that a single character in the comments can provide a selectable link to additional information possibly stored in a database format. In other embodiments, instead of an abbreviation, a tag can be a descriptive word.

In an exemplary scenario, two types of tags can be contemplated:
Descriptive tags, comprising fields such as "value", "range", linedit, source file, name used by the graphical user interface (GUI), structure;
Operational tags, comprising common values such as "expand configuration" with or without kio file, start/end region for autocompiler external function prototype.

For instance, descriptive tags define values that are acceptable as valid in the next field and are usually present in include files (where data structures are defined).

For instance, descriptive tags may be defined according to the following pseudo-code:

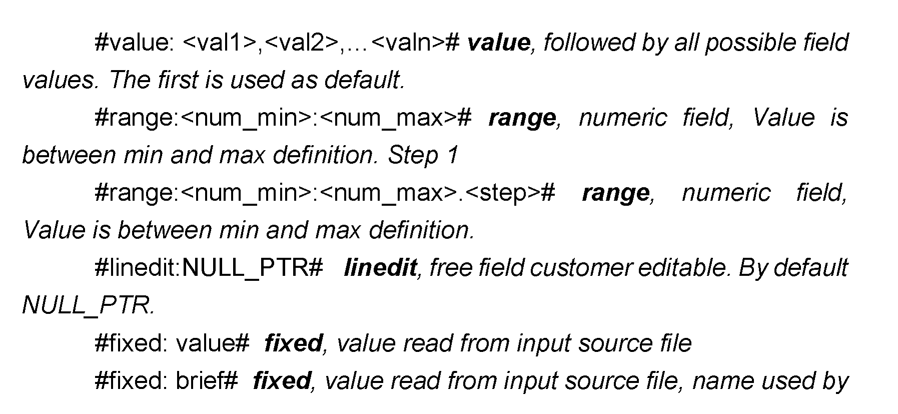

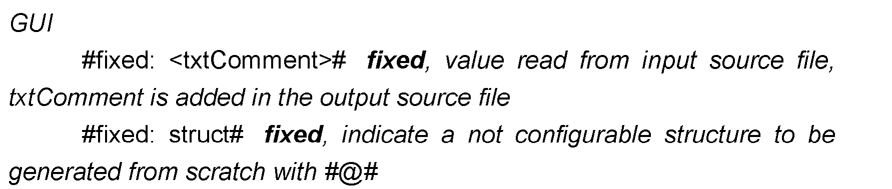

For instance, operational tags may be defined according to the following pseudo-code:

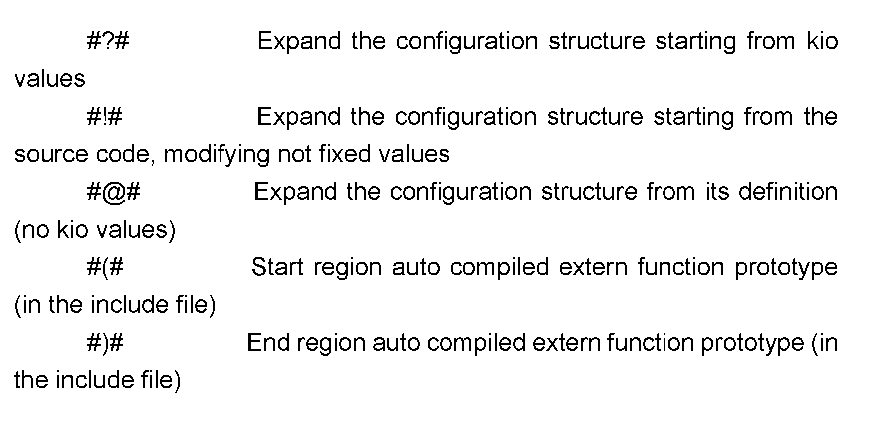

For instance, operational tags are placed in the source code where the data structure is instantiated, where the configurator acts on the data structure by completing/filling in all the fields.

Tags can indicate an attribute of a line of code, provide additional information about the code or further classify a comment for a line or lines of code

When a user desires to add tags to comments or to portions of code the user could "check boxes," associated with an addable tag by placing a cursor in the box and depressing a mouse button. Such an operation would be considered a semi-automatic way to add tags to comments or code.

As exemplified in Figure 3, the method can further comprise a graphical user interface or plugin 14 to facilitate a user U in populating the .kio file 15 with the SWC initialization values.

For instance, a GUI known under the name of Eclipse or Powershell can be used for running the configuration tool as per the present disclosure.

In an exemplary scenario, given a .h file comprising a set of descriptive tags, and a .c file comprising a set of operational tags, for instance it could be possible to provide the following line of code:

```
/**< @brief Configuration structure of the AUDIO driver. #?# */
      AUDIO_ConfigType AUDIO_Config = {
      };
```

Parsing the line of code above with a configurator tool as per the present disclosure, given the values in the definition tags of the .h file and the operational tags of the .c file, an output file .k can be generated comprising the following configurated code:

```
      /**< @brief Configuration structure of the AUDIO driver. #?# build:
      CTOCWL00318_2024-08-06_10:13:45 # */
      AUDIO_ConfigType AUDIO_Config = {
        STD_EN, /* AUDIO_Enable */
        0x00U, /* AUDIO_Volume */
                                              {                                 /*
                                              AUDIO_ChannelConfiguration
 [AUDIO_NUMBER_CHANNELS] */
          { /* AUDIO_ChannelConfiguration [0] */
             0x00U, /* AUDIO_Volume */
             STD_EN, /* AUDIO_dma_en */
             0x00U, /* AUDIO_dma_ch */
          },
          { /* AUDIO_ChannelConfiguration [1] */
             0x00U, /* AUDIO_Volume */
             STD_EN, /* AUDIO_dma_en */
             0x00U, /* AUDIO_dma_ch */
        },
        NULL_PTR, /* AUDIO_PLockCalback */
        STD_EN, /* AUDIO_PLockEn */
      };
```

In one or more embodiments it may be possible to use the GUI to change the values of the tags and to have them saved on file by the GUI itself (e.g., via the Ecplise GUI suite).

As exemplified in Figure 3, the source code with initialized definition/operational tag values 17 can be provided (together with an application 19 and a dependencies file 18, for instance) to a compiler circuit block 20 that can be launched by the user U to generate the configured executable software component 22.

As exemplified herein, the output code 22 is produced from the tagged source code provided 13 and modified, via the configurator 16, by adding the initialization values 15 according to the tags parsed via the configurator 16.

As exemplified herein, a computer-implemented method, comprises:
providing at least one executable software code portion 11 of a software component, SWC comprising instructions which, when the program is executed by an electronic control unit, ECU of a vehicle V, cause the ECU to perform signal processing operations;
providing at least one non-executable tagged software code portions 13 associated with the at least one executable software code portion of the SWC, the non-executable tagged software code portions comprising code comment tags of a set of code comment tags 12;
providing a set of configuration values 15 of the at least one executable software code portion of the SWC;
parsing 16 the at least one non-executable tagged software code portions 13 associated to the at least one executable software code portion of the SWC, detecting the tags in the at least one non-executable tagged software code portions;
based on the detected tags and on the set of configuration values, modifying the at least one executable software code portion associated to detected tags in the at least one executable software code portion, providing a configurated SWC 17 as a result.

For instance, the method further comprises:
providing the set of code comment tags comprising code comment tags to assign to specific features of the non-executable tagged software code portions based on the non-executable tagged software code portions;
parsing the lines of non-executable tagged software code portions searching for code that have a specific feature; and
locating the lines of executable software code portion with the specific feature utilizing the at least one tag in response to the parsing.

As exemplified herein, the method further comprises:
storing at least one executable software code portion in an interactive development environment, IDE;
storing non-executable tagged software code portions comprising code comment data;
associating the non-executable tagged software code portions with the at least one executable software code portion, the code comment data in the non-executable tagged software code portions containing information related to the at least one executable software code portion;
assigning at least one tag from a plurality of tags to the code comment data in the non-executable tagged software code portions associated to the at least one executable software code portion.

For instance, assigning at least one tag comprises assigning based on recognition of a keyword (e.g., between special characters /* and */) in one of the code comment data in the in the non-executable tagged software code portions or in the at least one executable software code portion.

For example, the set of configuration values of the at least one executable software code portion of the SWC is stored in a file such as konfigurator input/output, KIO data file and/or wherein the configuration values in the set of configuration values comprise values in XML format.

As exemplified herein, the method comprises providing the set of configuration values of the at least one executable software code portion of the SWC by at least one user via a plugin tool and/or a graphical user interface, GUI.

As exemplified herein, a processing device 10 comprises:
an interface 14 configured to receive a set of configuration values 15 of the at least one executable software code portion 11, 13 of the SWC;
a memory circuit block 13 configured to store:
   - at least one executable software code portion of a software component, SWC comprising instructions which, when the program is executed by an electronic control unit, ECU of a vehicle V, cause the ECU to perform signal processing operations, and
   - at least one non-executable tagged software code portions 13 associated with the at least one executable software code portion of the SWC, the non-executable tagged software code portions comprising code comment tags of a set of code comment tags;
processing circuitry 16 coupled to the interface and to the memory circuit block, the processing circuitry configured to:
   parse 16 the at least one non-executable tagged software code portions associated to the at least one executable software code portion of the SWC, detecting the tags in the at least one non-executable tagged software code portions;
   based on the detected tags and on the set of configuration values, modify the at least one executable software code portion associated to detected tags in the at least one executable software code portion, providing a configurated SWC as a result.

For instance, the set of code comment tags comprises code comment tags to assign to specific features of the non-executable tagged software code portions based on the non-executable tagged software code portions.

For instance, the processing circuitry is further configured to:
parse the lines of non-executable tagged software code portions searching for code that have a specific feature; and
locate the lines of executable software code portion with the specific feature(s) utilizing the at least one tag in response to the parsing.

For instance, the set of configuration values of the at least one executable software code portion of the SWC is stored in a konfigurator input/output, KIO data file and/or comprise values in XML format.

As exemplified herein, a computer program product loadable into the memory of one or more processing devices, the computer program product comprising instructions which, when the program is executed by a computer, cause the computer to carry out the method as per the present disclosure.

It will be otherwise understood that the various individual implementing options exemplified throughout the figures accompanying this description are not necessarily intended to be adopted in the same combinations exemplified in the figures. One or more embodiments may thus adopt these (otherwise non-mandatory) options individually and/or in different combinations with respect to the combination exemplified in the accompanying figures.

Without prejudice to the underlying principles, the details and embodiments may vary, even significantly, with respect to what has been described by way of example only, without departing from the extent of protection. The extent of protection is defined by the annexed claims.

## Claims

1. A computer-implemented method, comprising:
providing at least one executable software code portion (11) of a software component, SWC comprising instructions which, when the program is executed by an electronic control unit, ECU (ECU) of a vehicle (V), cause the ECU to perform signal processing operations,
providing at least one non-executable tagged software code portion (13) associated with the at least one executable software code portion (11) of the SWC, the at least one non-executable tagged software code portion (13) comprising code comment tags of a set of code comment tags (12);
providing a set of configuration values (15) of the at least one executable software code portion (11, 13) of the SWC;
parsing (16) the at least one non-executable tagged software code portion (13) associated to the at least one executable software code portion (11) of the SWC, detecting the code comment tags in the at least one non-executable tagged software code portion (13);
based on the detected code comment tags and on the set of configuration values (15), modifying the at least one executable software code portion (11) associated to detected code comment tags in the at least one executable software code portion (11), providing a configured SWC (17) as a result,
preferably wherein the set of code comment tags comprises descriptive tags and operative tags, and wherein the method comprises modifying header files associated to detected descriptive tags and/or modifying code files associated to detected operative tags.

2. The computer-implemented method of claim 1, comprising:
providing the set of code comment tags comprising code comment tags for assignment to specific features of the non-executable tagged software code portions (13) based on the at least one non-executable tagged software code portion (13);
parsing (16) the lines in the at least one non-executable tagged software code portion (13) searching for code that have a specific feature;
and
locating the lines of executable software code portion (11) with the specific feature utilizing the at least one code comment tag in response to the parsing (16),
preferably wherein the method comprises providing code comment tags configured for assignment to header files.

3. The computer-implemented method of claim 1 or claim 2, comprising:
storing at least one executable software code portion (11) in an interactive development environment, IDE;
storing non-executable tagged software code portions (13) comprising code comment data;
associating the non-executable tagged software code portions (13) with the at least one executable software code portion (11), the code comment data in the non-executable tagged software code portions (13) containing information related to the at least one executable software code portion (11);
assigning (12) at least one tag from a plurality of tags to the code comment data in the non-executable tagged software code portions (13) associated to the at least one executable software code portion (11),
preferably wherein the method comprises using the interactive development environment, IDE for storing descriptive tags in header files and/or operative tags in code files of the at least one executable software code portion (11).

4. The computer-implemented method of claim 3, wherein the assigning the at least one code comment tag comprises assigning said tag based on recognition of a keyword in one of the code comment data in the in the non-executable tagged software code portions (13) or in the at least one executable software code portion (11).

5. The computer-implemented method of any one of the previous claims, wherein:
the set of configuration values (15) of the at least one executable software code portion (11, 13) of the SWC is stored in a konfigurator input/output, KIO data file, and/or
the configuration values in the set of configuration values comprise values in XML format.

6. The computer-implemented method of any one of the previous claims, comprising providing the set of configuration values (15) of the at least one executable software code portion (11, 13) of the SWC by at least one user (U) via a plugin tool (14) and/or a graphical user interface, GUI.

7. A processing device (10), comprising:
an interface (14) configured to receive a set of configuration values (15) of the at least one executable software code portion (11, 13) of the SWC;
a memory circuit block (13) configured to store:
- at least one executable software code portion (11) of a software component, SWC comprising instructions which, when the program is executed by an electronic control unit, ECU (ECU) of a vehicle (V), cause the ECU to perform signal processing operations, and
- at least one non-executable tagged software code portion (13) associated with the at least one executable software code portion (11) of the SWC, the non-executable tagged software code portions (13) comprising code comment tags of a set of code comment tags (12);
processing circuitry (16) coupled to the interface (14) and to the memory circuit block (13), the processing circuitry (16) configured to:
parse (16) the at least one non-executable tagged software code portions (13) associated to the at least one executable software code portion (11) of the SWC, detecting the code comment tags in the at least one non-executable tagged software code portions (13);
based on the detected code comment tags and on the set of configuration values (15), modify the at least one executable software code portion (11) associated to detected code comment tags in the at least one executable software code portion (11), providing a configured SWC (17) as a result.

8. The processing device (10) of claim 7, wherein the set of code comment tags comprises code comment tags to assign to specific features based on the non-executable tagged software code portions (13);
wherein the processing circuitry (16) is further configured to:
- parse (16) the lines in non-executable tagged software code portions (13) searching for code that have a specific feature; and
- locate the lines of executable software code portion (11) with the specific feature utilizing the at least one code comment tag in response to the parsing (16).

9. The processing device of claim 7 or 8, wherein the set of configuration values (15) of the at least one executable software code portion (11, 13) of the SWC is stored in a konfigurator input/output, KIO data file and wherein the configuration values in the set of configuration values comprise values in XML format.

10. Computer program product loadable into the memory of one or more processing devices (10), the computer program product comprising instructions which, when the program is executed by a computer, cause the computer to carry out the method of any one of claims 1 to 6.
